# EUROPÄISCHE PATENTSCHRIFT

(11) **EP 3 301 298 B1**
(45) Veröffentlichungstag und Bekanntmachung des Hinweises auf die Patenterteilung: **15.05.2019**
(21) Anmeldenummer: 17200543.1
(22) Anmeldetag: 04.11.2016
(51) Int. Cl.: F03G 7/06

(54) **RÜCKBLICKELEMENT-KLAPPVORRICHTUNG**
REAR VIEW ELEMENT FOLDING DEVICE
DISPOSITIF REPLIABLE POUR ÉLÉMENT RÉTROVISEUR

(30) Priorität: 12.11.2015 DE 202015106118 U
(43) Veröffentlichungstag der Anmeldung: 04.04.2018
(62) Teilanmeldung aus: 16197212.0
(73) Patentinhaber: SMR Patents S.à.r.l., 2453 Luxembourg (LU)
(72) Erfinder: CZECHOWICZ, ALEXANDER, 44789 Bochum Deutschland (DE); WIECZOREK, ROMEO, 73732 Esslingen (DE); HEIN, PETER, 73770 Denkendorf (DE); HERRMANN, ANDREAS, 71364 Winnenden-Baach (DE)
(74) Vertreter: Weber-Bruls, Dorothée

(56) Entgegenhaltungen:
- EP-A1- 0 405 773
- EP-A1- 1 241 351
- EP-B1- 2 439 106
- JP-A- H07 291 032
- US-A- 4 728 181

## Beschreibung

Die vorliegende Erfindung betrifft eine Rückblickelement-Klappvorrichtung für ein Kraftfahrzeug zum Anfahren zumindest einer Drehstellung eines Elementgehäuses relativ zu einem an das Kraftfahrzeug montierbaren Elementfuß und zum Ver- oder Entriegeln zumindest einer Ruhestellung des Elementgehäuses relativ zum Elementfuß. Ferner betrifft sie ein Verfahren zum Ansteuern solch einer Rückblickelement-Klappvorrichtung.

Die EP 0 405 773 A1 beschreibt einen Außenspiegel für ein Kraftfahrzeug mit einem Spiegelgehäuse, das an einem zylindrischen Vorsprung befestigt ist, der schwenkbar an einer Basis angebracht ist. Eine Kupplung, die das Gehäuse in einer vorbestimmten Ausrichtung relativ zur Basis sichert, umfasst ein erstes Element, das eine Arretierungsformation trägt, ein zweites Element, das relativ zum ersten Element axial beweglich ist, um die Arretierungsformation in Eingriff mit einer komplementären Formation auf dem zweiten Element zu bringen, und eine Feder, die eine relative axiale Bewegung zwischen dem ersten Element und dem zweiten Element bewirken soll, um die Arretierungsformation in Eingriff mit der komplementären Formation zu bringen. Die Kupplung kann durch Erhitzen eines Formgedächtnislegierungsdrahts gelöst werden, der so angeordnet ist, dass er der Feder gegenüberliegt, um ein Lösen des Eingriffs der Arretierungsformation von der komplementären Formation zu bewirken.

In der US 4 728 181 A wird eine Stoßdämpfungsvorrichtung für einen Türspiegel von Automobilen beschrieben, die in der Lage ist, einen Stoß zu absorbieren, der auf den Türspiegel ausgeübt wird, wenn ein Fußgänger oder dergleichen den Türspiegel trifft, indem der Türspiegel automatisch gedreht wird. Die Stoßdämpfungsvorrichtung umfasst einen inneren Zylinder, der drehbar auf einer Stützachse montiert ist, und einen äußeren Zylinder, in den der innere Zylinder aufgenommen werden kann, und ein stoßdämpfendes Element, das zwischen dem inneren Zylinder und dem äußeren Zylinder angeordnet ist und jeweils an dem inneren und äußeren Zylinder befestigt ist. Der innere Zylinder weist in axialer Richtung eine längere Länge als der äußere Zylinder auf, die Stützachse ist zwischen oberen und unteren Flanschen angeordnet, die entweder an einer Tür oder einem Spiegelgehäuse angebracht sind, wobei die beiden Enden des inneren Zylinders durch die oberen und unteren Flansche befestigt sind und der äußere Zylinder mit dem anderen Bauteil ohne Flansch, entweder der Tür oder dem Spiegelgehäuse, verbunden ist.

Zur Vermeidung einer mit einer externen Kraft einhergehenden, übermäßigen Kraftanwendung auf einen Getriebemechanismus und dergleichen, beschreibt die JP H07 291032 einen Positionierungsmechanismus zwischen einem Basiselement und einem Spiegelgehäuse, der zum Halten des Spiegelgehäuses in mindestens einer Gebrauchsstellung vorgesehen ist, einen Kupplungsmechanismus zwischen einem Motor und dem Spiegelgehäuse, der zum Unterbrechen einer Kraftübertragung einer externen auf das Spiegelgehäuse wirkenden Kraft dient, wobei der Motor das Spiegelgehäuse zwischen einer Gebrauchsstellung und einer Nichtgebrauchsstellung dreht, einen Motorstoppmechanismus, der erkennt, sobald das Spiegelgehäuse eine Gebrauchsstellung oder eine Nichtgebrauchsstellung erreicht hat, und ein Mittel zum Umschalten der Drehrichtung des Motors in der Nähe des Kupplungsmechanismus. Die zum Lösen eines Eingriffs des Positionierungsmechanismus erforderliche Kraft ist kleiner eingestellt als die Kraft, die zum Lösen eines Eingriffs des Kupplungsmechanismus erforderlich ist, um zu vermeiden, dass der Kupplungsmechanismus gelöst wird, bevor sich das Spiegelgehäuse dreht.

Aus der EP 2 439 106 B1 ist ein Antriebsklappmechanismus für ein Rückblickelement, der an einem Kraftfahrzeug anzubringen ist, bekannt. Dieser Mechanismus umfasst ein Antriebsklappgehäuse, das zwischen einem Elementgehäuse und einem an einem Fahrzeug montierbaren Elementfuß montierbar ist. Ferner ist ein Kupplungsglied vorgesehen, das durch ein erstes Federmittel mit dem Elementfuß in Eingriff gebracht wird, wobei das Kupplungsglied aus einer Verriegelungsstellung bzw. Eingriffsstellung, in der Kupplungsarretierelemente eine relative Drehung zwischen dem Kupplungsglied und dem Elementfuß formschlüssig zurückhalten, und einer Entriegelungsstellung bzw. Nicht-Eingriffsstellung, in der ein Reibungseingriffsdrehmoment die relative Drehung zwischen dem Kupplungsglied und dem Elementfuß um eine Elementkopfachse nur etwas zurückhält, axial bewegbar ist, wobei das Kupplungsglied dem Elementgehäuse erlaubt, in Bezug auf den Elementfuß manuell bewegt zu werden. Zudem umfasst der Mechanismus einen elektrischen Antriebsstrang zur Erzeugung einer relativen Drehung zwischen dem Antriebsklappgehäuse und dem Kupplungsglied um die Elementkopfachse, wobei, wenn das Kupplungsglied in der Nicht-Eingriffsstellung ist und der elektrische Antriebstrang eine relative Drehung zwischen dem Antriebsklappgehäuse und dem Kupplungsglied erzeugt, sich das Antriebsklappgehäuse relativ zum Elementfuß dreht, bis eine Antriebsanschlagsfläche eines Antriebsanschlagsmittels eine Arretierung erreicht und ein Gegendrehmoment induziert, wobei das Gegendrehmoment größer ist als das Reibungseingriffsdrehmoment und so die Drehung des Antriebsklappgehäuses in Bezug auf den Elementfuß stoppt und stattdessen das Kupplungsglied dazu bringt, sich zu drehen, bis das Kupplungsglied eine eingerückte Stellung erreicht. Das Antriebsanschlagsmittel ist beweglich am Antriebsklappgehäuse montiert, und die Antriebsanschlagsfläche ist in Eingriff mit der an den Elementfuß montierten Arretierung, wobei die Antriebsanschlagsfläche axial zur Arretierung hin vorbelastet ist. Die Antriebsanschlagsfläche bewegt sich mit dem Antriebsklappgehäuse zwischen:
- einer Vorwärtsstellung, in der das Antriebsklappgehäuse und der Elementkopf in einer Vorwärtsklappstellung sind;
- einer Rückwärtsstellung, in der das Antriebsklappgehäuse und der Elementkopf in einer Rückwärtsklappstellung sind; und
- einer Antriebsstellung, in der das Antriebsklappgehäuse und der Elementkopf in einer ausgefahrenen Stellung sind, das Kupplungsglied in der Eingriffsstellung ist und die Antriebsanschlagsfläche zwischen der Arretierung und dem Antriebsklappgehäuse liegt, um einen formschlüssigen und wiederholbaren Anschlag zu liefern.

Neben dem Motor zum Anfahren der Vorwärtsstellung, Rückwärtsstellung und Antriebsstellung, offenbart die bekannte Rückblickelement-Klappvorrichtung einen Elektromagnet mit Feder zum Wechsel zwischen der Eingriffsstellung und der Nicht-Eingriffsstellung, also zum Ver- und Entriegeln.

Es ist die Aufgabe der Erfindung, eine Rückblickelement-Klappvorrichtung für ein Kraftfahrzeug zu liefern, die einen einfachen Aufbau aufweist, ohne Reduktion der Sicherheit beim Verriegeln. Auch sollen große Geräuschentwicklungen beim Anfahren unterschiedlicher Stellungen des Rückblickelements vermieden werden. Zudem soll ein Anfahren jeder Wunsch-Stellung schnell möglich sein.

Diese Aufgabe wird erfindungsgemäß gelöst durch eine Rückblickelement-Klappvorrichtung für ein Kraftfahrzeug mit den Merkmalen des Anspruches 1.

Hierbei legt zumindest ein Federelement in der Verriegelungsstellung eine Kraft an das erste und/oder zweite Angriffselement an, und der erste Aktuator bewegt beim Wechsel von der Verriegelungsstellung in die Entriegelungsstellung gegen die Kraft des Federelements das erste oder zweite Angriffselement, insbesondere in einer Hubbewegung, wobei vorzugsweise der erste Aktuator die Entriegelungsstellung für eine bestimmte Zeitdauer hält.

Hierbei ist der erste Aktuator als ein SMA-Antrieb ausgeführt, wobei der SMA-Antrieb zumindest ein SMA-Element, insbesondere in Form eines SMA-Drahts oder einer SMA-Feder, nutzt, woran zum Wechsel von der Verriegelungsstellung in die Entriegelungsstellung Strom, insbesondere in Form zumindest eines Stromstoßes und/oder über eine bestimmte Zeitdauer, vorzugsweise getaktet, anlegbar ist.

Dabei kann vorgesehen sein, dass das Federelement eine Spiralfeder umfasst, konzentrisch zu das oder der SMA-Elemente, insbesondere gleichmäßig verteilt, verlaufen. Jedes SMA-Element verkürzt sich beim Anlegen des Stroms durch Erwärmung, so dass das Federelement von einem Verriegelungszustand in einen Entriegelungszustand gestaucht wird, während beim Abkühlen des SMA-Elements das Federelement von dem Entriegelungszustand automatisch in den Verriegelungszustand zurückkehrt. Es kann vorgesehen sein, dass der erste Aktuator in Abhängigkeit von einem ersten Stellwegsensor und/oder mittels, insbesondere mechanischer, Endschalter einstellbar ist.

Mit der Erfindung wird auch vorgeschlagen, dass der zweite Aktuator als ein Elektromotor ausgeführt ist, der vorzugsweise über eine Getriebestufe an das erste Angriffselements angreift, und/oder der zweite Aktuator in Abhängigkeit von einem zweiten Stellwegsensor und/oder mittels, insbesondere mechanischer, Endschalter einstellbar ist.

Erfindungsgemäße Ausführungsformen können dadurch gekennzeichnet sein, dass das erste Angriffselement zumindest einen Vorsprung zum Eingriff in eine, vorzugsweise komplementär zu dem Vorsprung ausgebildete, Ausnehmung in dem zweiten Angriffselement und/oder das zweite Angriffselement zumindest einen Vorsprung zum Eingriff in eine, vorzugsweise komplementär zu dem Vorsprung ausgebildete Ausnehmung in dem ersten Angriffselement umfasst, wobei vorzugsweise eine Vielzahl von Vorsprüngen vorgesehen ist, und/oder vorzugsweise jeder Vorsprung im Querschnitt eine Trapezform aufweist, und/oder vorzugsweise das erste Angriffselement einen ersten Ring und das zweite Angriffselement einen zweiten Ring umfasst, wobei die Ringe konzentrisch zu der Rotationsachse A_{Φ} angeordnet sind, und/oder das erste Angriffselement als ein erster Zahnkranz und/oder ein erstes Klemmelement, Bremselement und/oder Rastelement und das zweite Angriffselement als ein zweiter Zahnkranz und/oder ein zweites Klemmelement, Bremselement und/oder Rastelement ausgeformt ist.

Ferner wird erfindungsgemäß vorgeschlagen, dass der Elementfuß einen, insbesondere zylindrischen, Grundkörper aufweist oder mit demselben fest verbunden ist, das Federelement an den Grundkörper und das zweite Angriffselement angreift, und der erste Aktuator an den Grundkörper und das zweiten Angriffselement angreift, so dass eine Verriegelungseinrichtung in Zylinderform, insbesondere Hohlzylinderform, vorliegt.

Ebenfalls kann vorgesehen sein, dass eine Steuer- oder Regeleinrichtung für den ersten und/oder zweiten Aktuator mit zumindest einer Sensoreinrichtung zusammenwirkt, und/oder die Steuer- oder Regeleinrichtung, der erste Aktuator und/oder der zweite Aktuator zumindest teilweise in der Verriegelungseinrichtung, insbesondere in dem Hohlzylinder, angeordnet sind.

Dabei wird wiederum vorgeschlagen, dass die Sensoreinrichtung einen ersten Sensor zum Sensieren eines Stellwegs des ersten Aktuators, wie in Form eines Widerstandssensors, Hall-Sensors, Temperatursensors oder Stromsensors in Kombination mit zumindest einem Anschlag, einen zweiten Sensor zum Sensieren eines Stellwegs des zweiten Aktuators, wie in Form eines Drehwinkelsensors oder Stromsensors in Kombination mit zumindest einem Anschlag, einen dritten Sensor zur Hinderniserkennung im Bereich des Rückblickelements, einen vierten Sensor zur Vibrationserfassung und/oder einen fünften Sensor zur Fahrbahn- und/oder Fahrbewegungserfassung umfasst.

Das Rückblickelement kann zumindest ein Spiegelelement und/oder eine Kamera umfassen. Bevorzugt ist gemäß der Erfindung, dass in der Verriegelungsstellung ein Formschluss zwischen dem ersten und zweiten Angriffselement vorliegt.

Erfindungswesentlich ist die Nutzung zweier Aktuatoren, nämlich einen für eine Verriegelung bzw. Entriegelung und einen anderen für eine Drehung eines Elementgehäuses relativ zu einem Elementfuß in einem Rückblickelement eines Kraftfahrzeugs. Diese Hybridform führt nicht nur zu einem einfachen Aufbau, sondern auch zu einer Geräuschreduzierung sowie einer Steigerung der Verstellgeschwindigkeit bzw. Abklappgeschwindigkeit bei gleichzeitig unreduzierter Lebensdauer.

Besonders vorteilhaft ist nach der Erfindung, dass der Aktuator, der eine Entriegelung durchführt, zumindest ein Formgedächtniselement (SMA-Element) nutzt und somit einen SMA-Aktuator darstellt. Ein SMA-Element, wie ein SMA-Draht oder eine SMA-Feder, kann nämlich über einen kurzen Stromstoß erhitzt werden, so dass es sich zusammenzieht und selbst gegen die Kraft eines Federelements beim Zusammenziehen wirken kann, um eine durch das Federelement gesicherte, vorzugsweise formschlüssige, Verriegelung aufzuheben. Sodann kann in einer Abkühlphase, in der das SMA-Element seine ursprüngliche Länge wiedergewinnt, auch das Federelement wieder in seine ursprüngliche Position zurückkehren, in der es eine Verriegelung sicherstellt, die im Fall eines Formschlusses auch relativ großen Kräften standhalten kann. Nur im entriegelten Zustand, in dem also das Federelement nicht eine Verriegelung erzwingt, kann über den zweiten Aktuator eine Drehung vorgenommen werden. Diese Drehung kann mittels eines beliebigen Antriebs ermöglicht werden, bspw. also wieder über einen SMA-Aktuator oder einen herkömmlichen Elektromotor. Die Ansteuerung beider Aktuatoren kann in Abhängigkeit von Ausgabewerten von Sensoren stattfinden, und zwar zum einen zum genauen Einstellen der jeweiligen Bewegung, also der Translationsbewegung des ersten Aktuators und der Drehbewegung des zweiten Aktuators. Zum anderen ermöglichen die Sensoren auch, auf äußere Umstände wird z. B. ein Hindernis in der Nähe eines Rückblickelements zu reagieren. Wird z. B. ein Hindernis auf der Beifahrerseite erfasst, kann über die erfindungsgemäße Rückblickelement-Klappvorrichtung das Rückblickelement auf der Beifahrerseite schnell an das Kraftfahrzeug angeklappt werden, um eine Beschädigung zu vermeiden. Auf der Fahrerseite ist solch ein Anklappen auch möglich, jedoch gekoppelt mit einer Fahrgeschwindigkeit, bspw. bis zu einer Geschwindigkeit von 6 Kilometer pro Stunde, die üblicherweise mit einem Ein-/ und Ausparken verbunden wird. Aber es ist auch ein Verklappen mit einer erfindungsgemäßen Rückblickelement-Klappvorrichtung in Reaktion auf erfasste Vibrationen, sei es durch eine Fahrtbewegung an sich oder die Umgebung des Kraftfahrzeugs, bspw. im Falle eines Unwetters, möglich.

Weitere Merkmale und Vorteile der Erfindung ergeben sich aus der nachfolgenden Beschreibung, in der Ausführungsbeispiele der Erfindung anhand ein schematischer Zeichnungen beispielhaft erläutert werden. Dabei zeigt:
- Figur 1a, 1b und 1c: jeweils eine Schnittansicht durch eine erfindungsgemäße Rückblickelement-Klappvorrichtung, und zwar in einer Verriegelungsstellung, einer Entriegelungsstellung und beim Anfahren einer Drehstellung; und
- Figur 2: ein Flussdiagramm eines Anfahren einer Drehstellung mittels der Rückblickelement-Klappvorrichtung der Figuren 1a-1c.

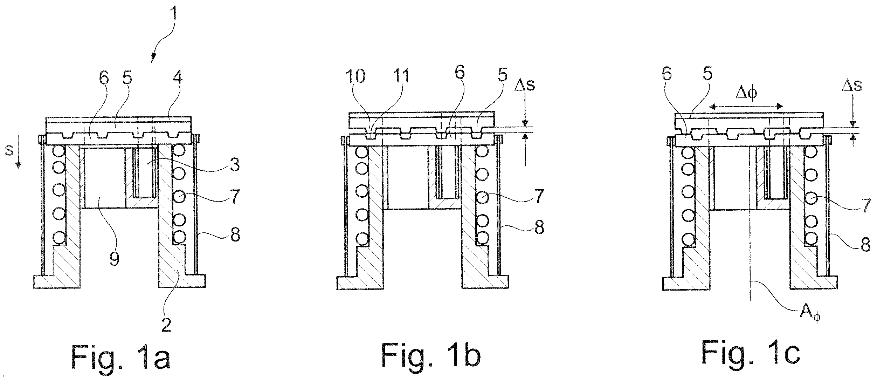

Die Figuren 1a bis 1c zeigen eine erfindungsgemäße Rückblickelement-Klappvorrichtung bspw. in Form einer Rückblickspiegel-Klappvorrichtung 1, die einen Grundkörper 2, der entweder von einem nicht-gezeigten Spiegelfuß bereitgestellt wird oder an demselben fest angebracht ist, nutzt, um weitere Bauteile zu tragen. So ist ein Antriebsmotor 3 als Teil eines Aktuators für eine Drehbewegung in dem Grundkörper 2, der eine Hohlzylinderform aufweist, angeordnet und dort auch befestigt, um über eine nicht-gezeigte Getriebestufe an ein Rotationselement 4 anzugreifen, das seinerseits mit einem nicht gezeigten Spiegelgehäuse bzw. Spiegelkopf verbunden ist, wobei in dem Spiegelkopf ein Spiegelelement bereitgestellt ist. Das Rotationselement 4 ist mit einem Angriffselement 5 fest verbunden oder mit demselben ausgeformt. Dieses Angriffselement 5 greift gemäß Figur 1a fest an ein weiteres Angriffselement 6 an, wenn eine Verriegelungsstellung eingenommen wird. Zwischen dem Angriffselement 6 und dem Grundkörper 2 ist ein Federelement 7, konzentrisch zu dem Grundkörper 2, angeordnet. Konzentrisch um das Federelement 7 verläuft eine Vielzahl von SMA-Drähten 8 oder ein SMA-Draht mit mehreren Windungen als Teil eines weiteren Aktuators. Jeder SMA-Draht 8 greift dabei einerseits an das Angriffselement 6 und andererseits an den Grundkörper 2 an, ebenso wie das Federelement 7.

In der in Figur 1a dargestellten Verriegelungsstellung, die eine verriegelte Ruhestellung darstellt, drückt das Federelement 7 das Angriffselement 6 an das Angriffselement 5 zum Verriegeln an. Dabei greifen trapezförmige Vorsprünge 10 des Angriffselements 5 in komplementäre Ausnehmungen 11 des Angriffselements 6. Die Angriffselemente 5, 6 können als Zahnkränze ausgeformt sein. Die Angriffselemente 5, 6 können aber auch als Klemm-, Brems- oder Rastelemente ausgebildet sein, also auch bspw. als reibschlüssige Bremse fungieren.

Wird ein mechanisches Drehmoment an das Rotationselement 4 angelegt, kann aufgrund der Trapezform der Vorsprünge 10 und somit auch der Ausnehmungen 11 der Eingriff zwischen den beiden Angriffselementen 5, 6 gelöst werden, und zwar unter Stauchung des Federelements 7. Dies ist für den sogenannten Kinderkopftest wesentlich, der prüft, ob beim Zusammenstoß eines Rückblickspiegels mit einem Kinderkopf der Rückblickspiegel wegklappt.

Wird ein Stromimpuls an die SMA-Drähte 8 angelegt, so heizen sich diese auf und ziehen sich dadurch zusammen, so dass das Federelement 7 gestaucht wird, wie Figur 1b zu entnehmen ist. Dabei wird entlang der Translationsrichtung S ein Spalt ΔS zwischen den beiden Angriffselementen 5 und 6 geöffnet und somit der Angriff der Vorsprünge 10 an die Ausnehmungen 11 aufgehoben, so dass eine Entriegelung vorliegt, wie in Figur 1b gezeigt. Mit anderen Worten führt die Kontraktion der SMA-Drähte 8 zu einer Stellkraft, die größer als die Andruckkraft des Federelements 7 ist. Dies führt zu einer Entkopplung der Angriffselemente 5 und 6, so dass das Rotationselement 4 samt Angriffselement 5 nur noch radial um eine Führungskontur des Grundkörpers 2 gelagert ist, während eine lineare Verschiebung, also Translation, des Rotationselements 4 samt Angriffselements 5 nicht weiter möglich ist.

In dem in Figur 1b gezeigten entriegelten Ruhezustand ist es möglich, durch Einschalten des Antriebsmotors 3 eine Drehung des Angriffselements 5 relativ zu dem Angriffselement 6 zu bewirken, nämlich um die Rotationsachse A_{Φ} um einen bestimmten Drehwinkel ΔΦ, wie in Figur 1c angedeutet. Der Antriebsmotor 3 erzeugt somit nach Aktivierung ein geringes Drehmoment, welches über die Getriebestufe an das Angriffselement 5 samt Rotationselement 4 geleitet wird, so dass sich eine Rotation dieser beiden Teile ergibt.

Für die Kontrolle des Stellwegs des Antriebsmotors 3 kann ein Drehwinkelsensor, wie ein Potentiometer, ein Hall-Sensor oder aber ein Induktionssensor, eingesetzt werden. Alternativ ist es auch möglich, sämtliche Positionen mittels mechanischer Endschalter abzufragen.

Zum Entriegeln ist es vorteilhaft, sämtliche SMA-Drähte 8 gleichzeitig mit Strom zu beaufschlagen, vorzugsweise jeweils mit einem kurzen Stromstoß, so dass auch tatsächlich ein gleichmäßiges Entriegeln stattfindet. Sobald kein Strom mehr an die SMA-Drähte 8 angelegt wird, kühlen dieselben wieder ab, so dass es automatisch zu einem erneuten Verriegeln kommt, da sich die SMA-Drähte 8 jeweils in ihre ursprüngliche Länge expandieren. Um die Zeitdauer der Entriegelung zu vergrößern, können mehrere kurze Stromstöße an die SMA-Drähte 8 angelegt werden.

Der Stellweg, der beim Zusammenziehen der SMA-Drähte 8 zur Öffnung des Spalts ΔS wirkt, kann über einen Hall-Sensor, eine Stromsteuerung, eine Widerstandsmessung oder dergleichen gesteuert stattfinden.

Anstelle von SMA-Drähten können auch SMA-Zugfedern, beispielsweise 5 gleichmäßig um den Umfang des Federelements 7 verteilt, eingesetzt werden. Die Dimensionierung der Kraft des SMA-Aktuators kann über die Anzahl an SMA-Drähten 8 erfolgen. Je höher die benötigte Stellkraft ist, desto mehr SMA-Drähte werden benötigt. Eine Überwachung des Stellwegs der SMA-Drähte kann über eine Widerstandsregelung erfolgen. Dabei kann über einen Messverstärker die Änderung des elektrischen Widerstands überwacht werden. Diese Änderungen sind signifikant mit steigendem ΔS. Bei kritischen Widerstandswerten oder einer Identifikation eines bestimmten Gradienten der Widerstandsänderungen über die Zeit kann ein Soll-Haltepunkt automatisch ermittelt werden. Die Erfassung eines Soll-Haltepunkts kann alternativ über ein mechanischen Endschalter erfolgen. Ein Zweipunkteregler kann das Signal eines Haltepunkts aufnehmen und in dem logischen Zustand der Stromquelle für die SMA-Drähte zwischen einem Parameter "beheizen" und "kühlen" durch An- und Ausschalten der Stromzufuhr ändern.

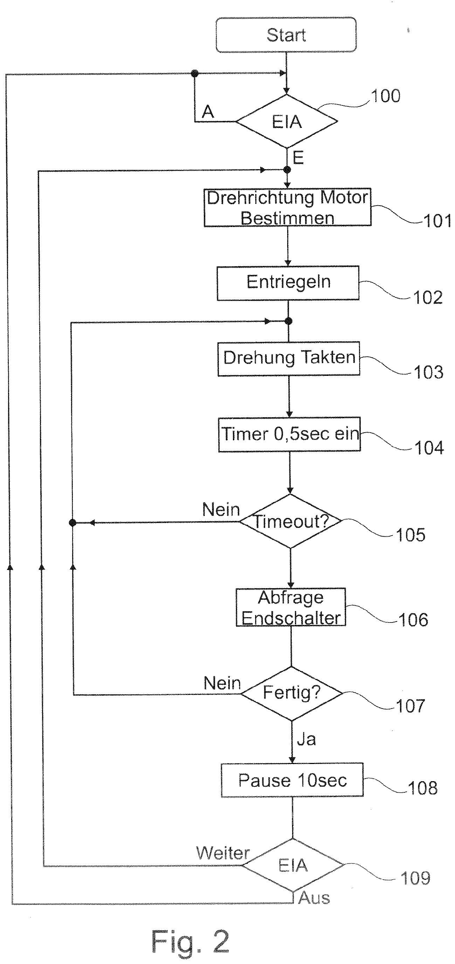

In Figur 2 ist nochmals der Ablauf eines Abklappvorgangs eines Rückblickelements mit einer erfindungsgemäßen Rückblickelement-Klappvorrichtung 1 dargestellt. In einem ersten Schritt 100 wird die Vorrichtung 1 eingeschaltet und sodann in einem zweiten Schritt 101 die für ein Anklappen notwendige Drehrichtung des Antriebsmotors 3 bestimmt. In einem dritten Schritt 102 wird über den SMA-Aktuator, nämlich durch Anlegen eines Strompulses an jeden der SMA-Drähte 8, ein Entriegeln bewirkt, wie in Figur 1b dargestellt. Danach wird über den Antriebsmotor 3 vorzugsweise getaktet eine Drehung von der ausgefahrenen Ruheposition in die Anklappstellung gedreht, und zwar über eine Vielzahl von Takten jeweils mit einer Dauer von 0,5 sec, wie durch die Schrittabfolge 103, 104 und 105 angedeutet. In gleicher Taktung werden weitere Stromimpulse an die SMA-Drähte 8 angelegt, um diese warm und somit verkürzt zu halten, so dass ein Entriegeln gewährleistet ist. Wird in einem nächsten Schritt 106 von einem Sensor in Form z.B. eines Endschalters signalisiert, dass die gewünschte Endposition erreicht ist, wird die Drehung beendet, wie durch die Schritte 107 und 108 angedeutet, so dass schließlich im Schritt 109 die Vorrichtung 1 ausgeschaltet werden kann.

Kommt es aufgrund einer Beendigung einer Strombeaufschlagung der SMA-Drähte 8 zu einem Abkühlen derselben, ziehen sich eben diese SMA-Drähte 8 zusammen, wobei sie ein Hineinrutschen der Vorsprünge 10 in die Ausnehmungen 11 erzwingen, so dass wieder die Verriegelungsstellung gemäß Figur 1a eingenommen wird.

Die SMA-Drähte 8 können durch geeignete Anlage von Stromimpulsen auf einer ersten Temperatur "warm" gehalten werden, um einen bestimmten Drehvorgang abschließen zu können. Auf einer zweiten Temperatur können die SMA-Drähte gehalten werden, um zwar noch eine Verriegelung sicherzustellen, aber ein schnelles Entriegeln zu ermöglichen. Mit anderen Worten lässt sich über die Einstellung der Temperatur der SMA-Drähte 8 eine Steuerung des Hybridsystems der erfindungsgemäßen Rückblickelement-Klappvorrichtung 1 bewirken.

Die in der voranstehenden Beschreibung, den Ansprüchen sowie Zeichnung offenbarten Merkmale der Erfindung können sowohl einzeln als auch in jeder beliebigen Kombination für die Verwirklichung der Erfindung in ihren verschiedenen Ausführungsformen wesentlich sein. Hineinrutschen der Vorsprünge 10 in die Ausnehmungen 11 erzwingen, so dass wieder die Verriegelungsstellung gemäß Figur 1a eingenommen wird.

Die SMA-Drähte 8 können durch geeignete Anlage von Stromimpulsen auf einer ersten Temperatur "warm" gehalten werden, um einen bestimmten Drehvorgang abschließen zu können. Auf einer zweiten Temperatur können die SMA-Drähte gehalten werden, um zwar noch eine Verriegelung sicherzustellen, aber ein schnelles Entriegeln zu ermöglichen. Mit anderen Worten lässt sich über die Einstellung der Temperatur der SMA-Drähte 8 eine Steuerung des Hybridsystems der erfindungsgemäßen Rückblickelement-Klappvorrichtung 1 bewirken.

### Bezugszeichenliste

- 1: Rückblickspiegel-Klappvorrichtung
- 2: Grundkörper
- 3: Antriebsmotor
- 4: Rotationselement
- 5: Angriffselement
- 6: Angriffselement
- 7: Federelement
- 8: SMA-Draht
- 9: Durchlass
- 10: Vorsprung
- 11: Ausnehmung
- 100: Schritt
- 101: Schritt
- 102: Schritt
- 103: Schritt
- 104: Schritt
- 105: Schritt
- 106: Schritt
- 107: Schritt
- 108: Schritt
- 109: Schritt

- S: Translationsrichtung
- ΔS: Spalt
- A_{Φ}: Rotationsachse
- ΔΦ: Drehwinkel

## Patentansprüche

1. Rückblickelement-Klappvorrichtung (1) für ein Kraftfahrzeug zum Anfahren zumindest einer Drehstellung eines Elementgehäuses relativ zu einem an das Kraftfahrzeug montierbaren Elementfuß und zum Ver- oder Entriegeln zumindest einer Ruhestellung des Elementgehäuses relativ zum Elementfuß, mit
• einem ersten Aktuator (8), der als SMA-Aktuator ausgeführt ist und zumindest ein SMA-Element, das ein Formgedächtniselement ist, für eine Translationsbewegung eines ersten, mit dem Elementgehäuse fest verbundenen Angriffselements (5) relativ zu einem zweiten, mit dem Elementfuß in Verbindung stehenden Angriffselement (6) entlang einer Rotationsachse A_{Φ} nutzt, wobei das erste Angriffselement (5) und das zweite Angriffselement (6) in einer Verriegelungsstellung, wie einer verriegelten Ruhestellung des Elementgehäuses, in einem festen Angriff aneinander stehen, wobei zumindest ein Federelement (7) in der Verriegelungsstellung eine Kraft an das erste und/oder zweite Angriffselement (5, 6) anlegt, und in einer Entriegelungsstellung, wie einer entriegelten Ruhestellung des Elementgehäuses, der erste Aktuator (8) beim Wechsel von der Verriegelungsstellung in die Entriegelungsstellung gegen die Kraft des Federelements (7) das erste oder zweite Angriffselement (5, 6) bewegt, indem sich jedes SMA-Element durch Anlegen eines Stroms durch Erwärmung verkürzt, wobei beim Abkühlen des SMA-Elements das Federelement von dem Entriegelungszustand automatisch in den Verriegelungszustand zurückkehrt, und
• einem zweiten, separaten Aktuator (3), der einen Motor (3) für eine Drehbewegung zum Verdrehen des ersten Angriffselements (5) relativ zum zweiten Angriffselement (6) um die Rotationsachse A_{Φ} nutzt, wobei durch eine erste Drehbewegung eine erste Drehstellung des Elementgehäuses aus der entriegelten Ruhestellung und durch eine zweite, der ersten Drehbewegung entgegengesetzte Drehbewegung des Elementgehäuses die entriegelte Ruhestellung aus der ersten Drehstellung anfahrbar sind.

2. Rückblickelement-Klappvorrichtung nach Anspruch 1,
**dadurch gekennzeichnet, dass**
der erste Aktuator (8) die Entriegelungsstellung für eine bestimmte Zeitdauer hält.

3. Rückblickelement-Klappvorrichtung nach Anspruch 1 oder 2,
**dadurch gekennzeichnet, dass**
der SMA-Antrieb das SMA-Element (8) in Form eines SMA-Drahts oder einer SMA-Feder nutzt, woran zum Wechsel von der Verriegelungsstellung in die Entriegelungsstellung Strom, insbesondere in Form zumindest eines Stromstoßes und/oder über eine bestimmte Zeitdauer, vorzugsweise getaktet, anlegbar ist.

4. Rückblickelement-Klappvorrichtung nach Anspruch 3,
**dadurch gekennzeichnet, dass**
das Federelement (7) eine Spiralfeder umfasst, konzentrisch zu der das oder die SMA-Elemente (8), insbesondere gleichmäßig verteilt, verlaufen, und/oder der erste Aktuator (8) in Abhängigkeit von einem ersten Stellwegsensor und/oder mittels, insbesondere mechanischer, Endschalter einstellbar ist.

5. Rückblickelement-Klappvorrichtung nach einem der vorhergehenden Ansprüche,
**dadurch gekennzeichnet, dass**
der zweite Aktuator (3) als ein Elektromotor ausgeführt ist, der vorzugsweise über eine Getriebestufe an das erste Angriffselements (5) angreift, und/oder der zweite Aktuator (3) in Abhängigkeit von einem zweiten Stellwegsensor und/oder mittels, insbesondere mechanischer, Endschalter einstellbar ist.

6. Rückblickelement-Klappvorrichtung nach einem der vorangehenden Ansprüche,
**dadurch gekennzeichnet, dass**
das erste Angriffselement (5) zumindest einen Vorsprung (10) zum Eingriff in eine, vorzugsweise komplementär zu dem Vorsprung (10) ausgebildete, Ausnehmung (11) in dem zweiten Angriffselement (6) und/oder das zweite Angriffselement (6) zumindest einen Vorsprung zum Eingriff in eine, vorzugsweise komplementär zu dem Vorsprung ausgebildete, Ausnehmung in dem ersten Angriffselement (5) umfasst, wobei vorzugsweise eine Vielzahl von Vorsprüngen (10) vorgesehen ist, und/oder vorzugsweise jeder Vorsprung (10) im Querschnitt eine Trapezform aufweist, und/oder vorzugsweise das erste Angriffselement (5) einen ersten Ring und das zweite Angriffselement (6) einen zweiten Ring umfasst, wobei die Ringe konzentrisch zu der Rotationsachse A_{Φ} angeordnet sind, und/oder
das erste Angriffselement (5) als ein erster Zahnkranz und/oder ein erstes Klemmelement, Bremselement und/oder Rastelement und das zweite Angriffselement (6) als ein zweiter Zahnkranz und/oder
ein zweites Klemmelement, Bremselement und/oder Rastelement ausgeformt ist.

7. Rückblickelement-Klappvorrichtung nach einem der vorangehenden Ansprüche,
**dadurch gekennzeichnet, dass**
der Elementfuß einen, insbesondere zylindrischen, Grundkörper (2) aufweist oder mit demselben fest verbunden ist,
das Federelement (7) an den Grundkörper (2) und das zweite Angriffselement (6) angreift, und
der erste Aktuator (8) an den Grundkörper (2) und das zweiten Angriffselement (6) angreift,
so dass eine Verriegelungseinrichtung in Zylinderform, insbesondere Hohlzylinderform, vorliegt.

8. Rückblickelement-Klappvorrichtung nach einem der vorangehenden Ansprüche,
**dadurch gekennzeichnet, dass**
eine Steuer- oder Regeleinrichtung für den ersten und/oder zweiten Aktuator (8, 3) mit zumindest einer Sensoreinrichtung zusammenwirkt, und/oder die Steuer- oder Regeleinrichtung, der erste Aktuator (8) und/oder der zweite Aktuator (3) zumindest teilweise in der Verriegelungseinrichtung, insbesondere in dem Hohlzylinder, angeordnet sind.

9. Rückblickelement-Klappvorrichtung nach Anspruch 8,
**dadurch gekennzeichnet, dass**
die Sensoreinrichtung einen ersten Sensor zum Sensieren eines Stellwegs des ersten Aktuators (8), wie in Form eines Widerstandssensors, Hall-Sensors, Temperatursensors oder Stromsensors in Kombination mit zumindest einem Anschlag,
einen zweiten Sensor zum Sensieren eines Stellwegs des zweiten Aktuators (3), wie in Form eines Drehwinkelsensors oder Stromsensors in Kombination mit zumindest einem Anschlag,
einen dritten Sensor zur Hinderniserkennung im Bereich des Rückblickelements, einen vierten Sensor zur Vibrationserfassung und/oder
einen fünften Sensor zur Fahrbahn- und/oder Fahrbewegungserfassung umfasst.

10. Rückblickelement-Klappvorrichtung nach einem der vorangehenden Ansprüche,
**dadurch gekennzeichnet, dass**
das Rückblickelement zumindest ein Spiegelelement und/oder eine Kamera umfasst.

11. Rückblickelement-Klappvorrichtung nach einem der vorangehenden Ansprüche,
**dadurch gekennzeichnet, dass**
in der Verriegelungsstellung ein Formschluss zwischen dem ersten und zweiten Angriffselement (5, 6) vorliegt.

## Claims

1. A rear-view element folding device (1) for a motor vehicle for approaching at least one rotational position of an element housing relative to an element foot mountable to the motor vehicle and for locking or unlocking at least one resting position of the element housing relative to the element foot, having
• a first actuator (8), which is designed as an SMA actuator and uses at least one SMA element, which is a shape memory element, for a translational movement of a first engagement element (5) connected firmly to the element housing relative to a second engagement element (6) connected with the element foot along an axis of rotation A_{Φ}, wherein the first engagement element (5) and the second engagement element (6) are firmly engaged with one another in a locking position, such as a locked resting position of the element housing, wherein at least one spring element (7) applies a force against the first and/or second engagement element (5, 6) in the locking position and in an unlocking position, such as an unlocked resting position of the element housing, the first actuator (8) moves the first or second engagement element (5, 6) against the force of the spring element (7) on changing from the locking position to the unlocking position in that each SMA element is shortened by heating by applying a current, wherein on cooling of the SMA element the spring element returns automatically from the unlocking state to the locking state, and
• a second, separate actuator (3), which uses a motor (3) for a rotational movement for rotating the first engagement element (5) relative to the second engagement element (6) about the axis of rotation A_{Φ}, wherein by a first rotational movement a first rotational position of the element housing is approachable from the unlocked resting position and by a second rotational movement contrary to the first rotational movement of the element housing the unlocked resting position is approachable from the first rotational position.

2. The rear-view element folding device according to claim 1,
**characterized in that**
the first actuator (8) holds the unlocking position for a certain period of time.

3. The rear-view element folding device according to claim 1 or 2,
**characterized in that**
the SMA drive uses the SMA element (8) in the form of an SMA wire or an SMA spring, to which current, in particular in the form of at least one current surge and/or over a certain period of time, preferably clocked, can be applied for the change from the locking position to the unlocking position.

4. The rear-view element folding device according to claim 3,
**characterized in that**
the spring element (7) comprises a coil spring, concentrically to which the SMA element(s) (8) run, in particular evenly distributed, and/or
the first actuator (8) is adjustable depending on a first travel sensor and/or by means of, in particular mechanical, end switches.

5. The rear-view element folding device according to any one of the preceding claims,
**characterized in that**
the second actuator (3) is designed as an electric motor, which preferably engages via a gear stage on the first engagement element (5), and/or
the second actuator (3) is adjustable depending on a second travel sensor and/or by means of, in particular mechanical, end switches.

6. The rear-view element folding device according to any one of the preceding claims,
**characterized in that**
the first engagement element (5) comprises at least one projection (10) for engagement in a recess (11), preferably complementary formed to the projection (10), in the second engagement element (6) and/or the second engagement element (6) comprises at least one projection for engagement in a recess, preferably complementary formed to the projection, in the first engagement element (5), wherein preferably a plurality of projections (10) is provided, and/or preferably each projection (10) has a trapezoidal shape in cross-section, and/or
preferably the first engagement element (5) comprises a first ring and the second engagement element (6) comprises a second ring, wherein the rings are arranged concentrically to the axis of rotation A_{Φ}, and/or
the first engagement element (5) is formed as a first gear rim and/or
a first clamping element, braking element and/or latching element and the second engagement element (6) is formed as a second gear rim and/or
a second clamping element, braking element and/or latching element.

7. The rear-view element folding device according to any one of the preceding claims,
**characterized in that**
the element foot has a, in particular cylindrical, base body (2) or is firmly connected to the same,
the spring element (7) engages on the base body (2) and the second engagement element (6), and
the first actuator (8) engages on the base body (2) and the second engagement element (6),
so that a locking device is present in a cylindrical form, in particular a hollow-cylindrical form.

8. The rear-view element folding device according to any one of the preceding claims,
**characterized in that**
an open- or closed-loop control device for the first and/or second actuator (8, 3) interacts with at least one sensor device, and/or
the open or closed-loop control device, the first actuator (8) and/or the second actuator (3) are arranged at least partially in the locking device, in particular in the hollow cylinder.

9. The rear-view element folding device according to claim 8,
**characterized in that**
the sensor device comprises a first sensor for sensing a travel of the first actuator (8), such as in the form of a resistance sensor, Hall effect sensor, temperature sensor or current sensor in combination with at least one stop,
a second sensor for sensing a travel of the second actuator (3), such as in the form of an angle of rotation sensor or current sensor in combination with at least one stop,
a third sensor for obstacle detection in the area of the rear-view element,
a fourth sensor for vibration detection and/or
a fifth sensor for roadway and/or travel motion detection.

10. The rear-view element folding device according to any one of the preceding claims,
**characterized in that**
the rear-view element comprises at least one mirror element and/or camera.

11. The rear-view element folding device according to any one of the preceding claims,
**characterized in that**
in the locking position, a form fit is present between the first and second engagement element (5, 6).

## Revendications

1. Dispositif rabattable d'élément rétroviseur (1) pour un véhicule automobile pour s'approcher d'au moins une position de rotation d'un boîtier d'élément par rapport à un pied d'élément pouvant être monté sur le véhicule automobile et pour verrouiller ou déverrouiller au moins une position de repos du boîtier d'élément par rapport au pied d'élément, ayant :
• un premier actionneur (8), qui est conçu comme un actionneur AMF et qui utilise au moins un élément AMF, qui est un élément à mémoire de forme, pour un mouvement de translation d'un premier élément d'engagement (5) relié de manière fixe au boîtier d'élément par rapport à un deuxième élément d'engagement (6) relié au pied d'élément le long d'un axe de rotation A_{Φ} ; dans lequel le premier élément d'engagement (5) et le deuxième élément d'engagement (6) s'engagent de manière fixe l'un avec l'autre dans une position de verrouillage, telle qu'une position de repos verrouillée du boîtier d'élément, dans lequel au moins un élément à ressort (7) applique une force au premier et/ou deuxième élément d'engagement (5, 6) dans la position de verrouillage, et dans une position de déverrouillage, telle qu'une position de repos déverrouillée du boîtier d'élément, le premier actionneur (8) déplace le premier ou deuxième élément d'engagement (5, 6) contre la force de l'élément à ressort (7) lors du passage de la position de verrouillage à la position de déverrouillage en raccourcissant chaque élément AMF par échauffement en appliquant un courant, dans lequel lors du refroidissement de l'élément AMF l'élément à ressort revient automatiquement de l'état de déverrouillage à l'état de verrouillage, et
• un deuxième actionneur (3) séparé, qui utilise un moteur (3) pour un mouvement de rotation pour faire tourner le premier élément d'engagement (5) par rapport au deuxième élément d'engagement (6) autour de l'axe de rotation A_{Φ} ; dans lequel par un premier mouvement de rotation une première position de rotation du boîtier d'élément peut être approchée à partir de la position de repos déverrouillée et par un deuxième mouvement de rotation du boîtier d'élément opposé au premier mouvement de rotation la position de repos déverrouillée peut être approchée à partir de la première position de rotation.

2. Dispositif rabattable d'élément rétroviseur selon la revendication 1, **caractérisé en ce que**
le premier actionneur (8) maintient la position de déverrouillage pendant une certaine durée.

3. Dispositif rabattable d'élément rétroviseur selon la revendication 1 ou 2, **caractérisé en ce que**
l'entraînement AMF utilise l'élément AMF (8) sous la forme d'un fil AMF ou d'un ressort AMF auquel un courant, en particulier sous la forme d'au moins un choc électrique et/ou pendant une certaine durée, de préférence de manière cadencé, peut être appliqué pour le passage de la position de verrouillage à la position de déverrouillage.

4. Dispositif rabattable d'élément rétroviseur selon la revendication 3, **caractérisé en ce que**
l'élément à ressort (7) comprend un ressort hélicoïdal, concentriquement auquel le ou les éléments AMF (8) s'étendent, en particulier répartis de manière régulière, et/ou le premier actionneur (8) est réglable en fonction d'un premier capteur de course de réglage et/ou au moyen d'interrupteurs de fin de course, en particulier mécaniques.

5. Dispositif rabattable d'élément rétroviseur selon l'une quelconque des revendications précédentes, **caractérisé en ce que**
le deuxième actionneur (3) est conçu comme un moteur électrique, qui s'engage de préférence par l'intermédiaire d'un étage de transmission sur le premier élément d'engagement (5), et/ou
le deuxième actionneur (3) est réglable en fonction d'un deuxième capteur de course de réglage et/ou au moyen d'interrupteurs de fin de course, en particulier mécaniques.

6. Dispositif rabattable d'élément rétroviseur selon l'une quelconque des revendications précédentes, **caractérisé en ce que**
le premier élément d'engagement (5) comprend au moins une saillie (10) pour l'engagement dans un évidement (11), de préférence formé complémentaire à la saillie (10), dans le deuxième élément d'engagement (6) et/ou le deuxième élément d'engagement (6) comprend au moins une saillie pour l'engagement dans un évidement, de préférence formé complémentaire à la saillie, dans le premier élément d'engagement (5), dans lequel de préférence une pluralité de saillies (10) est prévue, et/ou de préférence chaque saillie (10) a une forme trapézoïdale en section transversale, et/ou
de préférence, le premier élément d'engagement (5) comprend un premier anneau et le deuxième élément d'engagement (6) comprend un deuxième anneau, les anneaux étant disposés concentriquement à l'axe de rotation A_{Φ}, et/ou
le premier élément d'engagement (5) est formé comme une première couronne dentée et/ou un premier élément de serrage, élément de freinage et/ou élément d'encliquetage et le deuxième élément d'engagement (6) est formé comme une deuxième couronne dentée et/ou un deuxième élément de serrage, élément de freinage et/ou élément d'encliquetage.

7. Dispositif rabattable d'élément rétroviseur selon l'une quelconque des revendications précédentes, **caractérisé en ce que**
le pied d'élément a un corps de base (2), en particulier cylindrique, ou est relié de manière fixe à celui-ci,
l'élément à ressort (7) s'engage sur le corps de base (2) et le deuxième élément d'engagement (6), et
le premier actionneur (8) s'engage sur le corps de base (2) et le deuxième élément d'engagement (6),
de sorte qu'un dispositif de verrouillage se présente sous une forme cylindrique, en particulier sous une forme cylindrique creux.

8. Dispositif rabattable d'élément rétroviseur selon l'une quelconque des revendications précédentes, **caractérisé en ce que**
un dispositif de commande ou de régulation pour le premier et/ou deuxième actionneur (8, 3) interagit avec au moins un dispositif capteur, et/ou
le dispositif de commande ou de régulation, le premier actionneur (8) et/ou le deuxième actionneur (3) sont disposés au moins partiellement dans le dispositif de verrouillage, en particulier dans le cylindre creux.

9. Dispositif rabattable d'élément rétroviseur selon la revendication 8, **caractérisé en ce que**
le dispositif capteur comprend un premier capteur pour détecter une course de réglage du premier actionneur (8), tel que sous la forme d'un capteur à résistance, capteur à effet Hall, capteur de température ou capteur de courant en combinaison avec au moins une butée,
un deuxième capteur pour détecter une course de réglage du deuxième actionneur (3), tel que sous la forme d'un capteur d'angle de rotation ou capteur de courant en combinaison avec au moins une butée,
un troisième capteur pour la détection d'obstacles dans la zone de l'élément rétroviseur,
un quatrième capteur pour la détection de vibrations et/ou
un cinquième capteur pour la détection de voie et/ou de déplacement.

10. Dispositif rabattable d'élément rétroviseur selon l'une quelconque des revendications précédentes, **caractérisé en ce que**
l'élément rétroviseur comprend au moins un élément miroir et/ou une caméra.

11. Dispositif rabattable d'élément rétroviseur selon l'une quelconque des revendications précédentes, **caractérisé en ce que**
dans la position de verrouillage, une liaison par complémentarité de forme est présent entre le premier et deuxième élément d'engagement (5, 6).
